## Europäisches Patentamt
## European Patent Office
## Office européen des brevets

(19)

(11) Numéro de publication: **0 223 645**
**B1**

(12) # FASCICULE DE BREVET EUROPEEN

(45) Date de publication du fascicule du brevet:
26.04.89

(51) Int. Cl.⁴: **F16D 23/14**

(21) Numéro de dépôt: **86402200.9**

(22) Date de dépôt: **06.10.86**

(54) **Montage de butée de débrayage réversible, notamment pour véhicule automobile.**

(30) Priorité: **09.10.85 FR 8514933**

(43) Date de publication de la demande:
**27.05.87 Bulletin 87/22**

(45) Mention de la délivrance du brevet:
**26.04.89 Bulletin 89/17**

(84) Etats contractants désignés:
**DE ES FR GB IT**

(56) Documents cités:
**EP-A- 0 110 602**
**FR-A- 2 304 826**
**FR-A- 2 544 036**
**FR-A- 2 545 172**
**FR-A- 2 557 234**
**GB-A- 2 062 799**

(73) Titulaire: **VALEO, 64 Avenue de la Grande Armée,
F-75017 Paris(FR)**

(72) Inventeur: **Gay, Christian, 36 Rue Labat,
F-75018 Paris(FR)**
Inventeur: **Lassiaz, Philippe, 19 Rue Thiers,
F-92100 Boulogne(FR)**

(74) Mandataire: **CABINET BONNET-THIRION, 95 Boulevard
Beaumarchais, F-75003 Paris(FR)**

## Description

La présente invention concerne d'une manière générale les butées de débrayage, notamment pour véhicule automobile.

Elle vise plus particulièrement celles de ces butées de débrayage qui, dites tirées, sont destinées à agir en traction sur le dispositif débrayeur de l'embrayage à commander, et qui, pour ce faire, sont attelées à celui-ci.

Il a été proposé, à cet effet, dans certains montages de butée de débrayage, et c'est le cas, notamment, tant dans le montage de butée de débrayage décrit dans le brevet français déposé le 19 Mars 1975 sous le No 7 508 514 et publié sous le No 2 304 826 que dans celui décrit dans le brevet français déposé le 27 Décembre 1983 sous le No 8 320 829 et publié sous le No 2 557 234, de mettre en œuvre, entre la butée de débrayage et le dispositif débrayeur à commander, pour l'attelage de cette butée de débrayage à ce dispositif débrayeur, une pièce, dite ici par simple commodité "pièce d'accostage", ou "pièce d'action", qui, convenablement rapportée sur ledit dispositif débrayeur, comporte radialement, du côté de celui-ci opposé à la butée de débrayage, une collerette d'appui par laquelle elle est apte à agir sur lui, en coopération avec des moyens de solidarisation en traction, qui, établis entre une telle pièce d'accostage et une pièce, dite ici par simple commodité "pièce d'attaque", appartenant à la butée de débrayage, sont propres à assurer une liaison axiale entre lesdites pièces dans le sens axial allant du dispositif débrayeur à la butée de débrayage.

En pratique, dans les brevets français mentionnés ci-dessus, les moyens de solidarisation en traction mis en œuvre comportent, d'une manière générale, d'une part, un organe de couplage annulaire élastiquement déformable radialement, par exemple un simple jonc, qui est au moins partiellement engagé radialement dans une gorge annulaire de retenue ménagée pour lui sur l'une quelconque des pièces à solidariser en traction, et, d'autre part, une portée d'entraînement, qui est ménagée globalement transversalement sur l'autre de ces pièces, et avec laquelle ledit organe de couplage coopère axialement en appui dans le sens axial correspondant à la liaison axiale recherchée.

Une telle disposition a notamment pour avantage de permettre d'équiper par avance de la pièce d'accostage le dispositif débrayeur de l'embrayage à commander, avant même l'assemblage du mécanisme d'embrayage correspondant, et d'assurer ensuite, lors de l'assemblage de l'ensemble, la venue en prise par simple encliquetage de la butée de débrayage avec ladite pièce d'accostage, et donc avec ledit dispositif débrayeur.

Si le couplage recherché entre la butée de débrayage et le dispositif débrayeur de l'embrayage à commander se trouve ainsi très aisément assuré, il n'en est pas de même, sans autre, pour le processus inverse, c'est-à-dire pour le processus nécessaire pour assurer un découplage entre cette butée de débrayage et ce dispositif débrayeur.

Sans autre, il faut en effet normalement procéder au préalable au démontage de l'embrayage, pour avoir accès de l'avant, c'est-à-dire du côté du dispositif débrayeur, sur l'organe de couplage, et être ainsi en mesure d'en provoquer l'effacement élastique nécessaire au découplage recherché.

Pour pallier cette difficulté, il a été proposé, dans le FR-A 2 557 234 mentionné ci-dessus, de mettre en œuvre, pour la délimitation de la gorge de retenue, une pièce mobile, en pratique en forme de douille, dite pièce de désolidarisation, qui est normalement axialement à distance de l'organe de couplage et qu'il suffit de déplacer axialement en direction de cet organe de couplage pour le chasser hors de ladite gorge de retenue et ainsi assurer le découplage recherché.

Bien que donnant satisfaction, une telle disposition présente des difficultés.

En particulier, un outil est nécessaire pour la manœuvre de la pièce de désolidarisation, ce qui rend relativement malaisée cette manœuvre.

Dans la demande de brevet européen déposée le 10 Novembre 1983 sous le No 83306880.2 et publiée sous le No 0 110 602, il est décrit une disposition dont il résulte au contraire, que, tant pour le découplage que pour le couplage, il suffit d'appliquer un mouvement axial relatif approprié à la butée de débrayage par rapport au dispositif débrayeur de l'embrayage à commander, le mouvement axial ainsi à appliquer à cette butée de débrayage pouvant très simplement lui être imprimé, en aveugle, à l'aide de l'organe de commande, en pratique une fourchette de débrayage, qui lui est usuellement associé.

Suivant cette disposition, il est associé à l'organe de couplage un organe annulaire de découplage, qui est mis en place par avance sur celle des pièces à solidariser en traction qui comporte la portée d'entraînement, à distance de celle-ci, et avec lequel, en réponse à un mouvement axial suffisant de la butée de débrayage dans le sens axialement tourné en direction opposée à ladite portée d'entraînement, peut venir en prise ledit organe de couplage, moyennant une mise sous contrainte de celui-ci.

L'organe de couplage étant ainsi mis sous contrainte par l'organe de découplage, il entraîne avec lui ce dernier si la butée de débrayage est à nouveau l'objet d'un déplacement axial dans le sens axial tourné vers la portée d'entraînement, mais, du fait même de sa mise sous contrainte, il échappe alors à cette portée d'entraînement, ce qui conduit effectivement au découplage recherché.

Mais, dans le même mouvement, entraîné qu'il est par l'organe de couplage, l'organe de découplage échappe lui-même alors à la pièce qu'il équipait initialement, et tout nouveau couplage est impossible, sauf à désolidariser au préalable l'organe de découplage de l'organe de couplage, et à remettre à leur place initiale l'un et l'autre de ces organes, ou tous nouveaux organes neufs propres à leur être substitués, ce qui relève en pratique d'opérations particulièrement malaisées à conduire.

Or, sur les chaînes de montage des véhicules concernés, il peut au contraire être avantageux de pouvoir procéder à un nouveau couplage après un découplage.

En effet, après le couplage de la butée de débrayage sur le dispositif débrayeur de l'embrayage à équiper, d'autres opérations de montage sont à assurer sur de telles chaînes de montage, et, par exemple, le branchement du câble d'embrayage propre à la commande de l'ensemble, et, au cours de telles opérations, une action fortuite sur la fourchette de débrayage peut entraîner de manère intempestive un découplage de la butée de débrayage.

Dans le FR-A 2 588 051, il a été proposé une disposition permettant de manière particulièrement simple et avantageuse de procéder de façon réversible à un couplage et/ou à un découplage.

Suivant cette disposition, il est associé à l'organe de couplage un organe annulaire de découplage, comme précédemment, mais cet organe de découplage est monté mobile axialement dans une gorge à laquelle il ne peut échapper.

En pratique, cette gorge est ménagée dans celle des pièces à solidariser en traction qui comporte la portée d'entraînement, et ladite portée d'entraînement appartient à l'un de ses flancs.

Conjointement, l'organe de découplage se trouve présenter un portée tronconique qui va en s'écartant radialement du fond de la gorge dans laquelle il est disposé, en direction de la portée d'entraînement, et dont la circonférence axialement la plus proche de ladite portée d'entraînement est au moins à niveau avec la circonférence formant le bord libre de celle-ci.

Lorsqu'un découplage est recherché, il suffit, comme précédemment, d'agir sur la butée de débrayage de manière à ce que l'organe de couplage vienne en prise avec l'organe de découplage.

Mais, cette venue en prise de l'organe de couplage avec l'organe de découplage se fait par la portée tronconique de ce dernier, en sorte que, lorsque, pour le découplage recherché, la butée de débrayage est à nouveau déplacée axialement dans le sens axial tourné vers la portée d'entraînement, l'organe de découplage, qui vient en butée contre cette dernière provoque, par sa dite portée tronconique, et tout en restant en place au sein de la pièce qu'il équipe, une rétraction de l'organe de couplage suffisante pour que celui-ci puisse échapper tant à cet organe de découplage qu'à ladite portée d'entraînement, et, par là, à la pièce comportant cette portée d'entraînement.

L'organe de découplage étant demeuré en place, un nouveau couplage est possible.

Mais, en pratique, la disposition ainsi décrite dans le FR-A 2 588 051 en question ne convient qu'au cas où l'organe de couplage est du type d'un de ceux décrits dans le FR-A 2 304 826 également mentionné ci-dessus, c'est-à-dire au cas où cet organe de couplage comporte une rondelle globalement tronconique, qui, par l'une de ses périphéries, est engagée dans la gorge de retenue associée, et qui présente, le long de son autre périphérie, d'une part, sensiblement dans son prolongement, des pattes par lesquelles elle est adaptée à coopérer axialement en appui avec la portée d'entraînement, et, d'autre part, des pattes, qui, faisant un angle avec les précédentes, sont elles aussi engagées dans la gorge de retenue, du côté opposé à la rondelle globalement tronconique dont elles sont issues.

Mais elle ne convient pas au cas où l'organe de couplage est un simple jonc, c'est-à-dire au cas où cet organe de couplage se présente sous la forme d'un tore, et, par exemple, sous la forme d'un tore de section transversale circulaire.

La présente invention a au contraire d'une manière générale pour objet une disposition adaptée à un tel cas.

De manière plus précise, elle a pour objet un montage de butée de débrayage, du genre comportant, pour l'attelage d'une butée de débrayage au dispositif débrayeur d'un embrayage, une pièce, dite ici par commodité pièce d'accostage, qui est convenablement rapportée sur ledit dispositif débrayeur, et des moyens de solidarisation en traction, qui, établis entre la pièce d'accostage et une pièce, dite ici par commodité pièce d'attaque, appartenant à la butée de débrayage, sont propres à assurer une liaison axiale entre lesdites pièces dans le sens axial allant du dispositif débrayeur à ladite butée de débrayage, lesdits moyens de solidarisation en traction comportant, d'une part, un organe annulaire de couplage, élastiquement déformable radialement, qui est au moins partiellement engagé radialement dans une gorge annulaire de retenue ménagée pour lui sur l'une quelconque desdites pièces, et, d'autre part, une portée d'entraînement, qui est ménagée globalement transversalement sur l'autre de celles-ci, et avec laquelle ledit organe de couplage est apte à coopérer axialement en appui dans le sens axial considéré, et du genre comportant également, pour le découplage de la butée de débrayage par rapport au dispositif débrayeur de l'embrayage concerné, un organe annulaire de découplage monté mobile axialement dans une gorge, qui est ménagée pour lui sur celle des pièces comportant la portée d'entraînement, et dont ladite portée d'entraînement appartient à l'un des flancs, ce montage de butée de débrayage étant d'une manière générale caractérisé en ce que, l'organe de couplage étant formé par un jonc, l'organe de découplage comporte annulairement, tournée vers la gorge de retenue, une rainure propre à en permettre l'accouplement débrayable avec ledit organe de couplage, au moins pour le sens axial allant du dispositif débrayeur à la butée de débrayage.

Grâce à une telle disposition, et comme précédemment, le découplage peut avantageusement résulter d'un simple déplacement axial, en aveugle, de la butée de débrayage, d'abord dans un sens, puis en sens opposé, et après un tel découplage, il est avantageusement possible de procéder de manière réversible à un nouveau couplage.

En outre, se présentant sous un volume relativement modeste, l'organe de découplage ainsi intégré à un tel montage de butée de débrayage ne conduit avantageusement à aucune augmentation sensible de l'encombrement axial ou diamétral de l'une ou l'autre des pièces concernées de celui-ci.

Les caractéristiques et avantages de l'invention ressortiront d'ailleurs de la description qui va suivre, à titre d'exemple, en référence aux dessins schématiques annexés sur lesquels:

la figure 1 est une vue en coupe axiale d'un montage de butée de débrayage mettant en œuvre un organe de découplage suivant l'invention;

la figure 2 reprend, à échelle supérieure, le détail de la figure 1 repéré par un encart II sur celle-ci;

la figure 3 est, à échelle différente, une vue partielle en élévation de l'organe de couplage mis en œuvre dans ce montage de butée de débrayage, suivant la flèche III de la figure 2;

la figure 4 est une vue partielle en coupe axiale de cet organe de découplage, suivant la ligne IV–IV de la figure 3;

les figures 5A, 5B, 5C, 5D, 5E sont des vues qui, reprenant celle de la figure 2, illustrent le couplage de la butée de débrayage concernée avec la pièce d'accostage portée par le dispositif débrayeur de l'embrayage à commander;

les figures 6A, 6B, 6C, 6D, 6E sont des vues qui, reprenant également celle de la figure 2, illustrent au contraire le découplage de cette butée de débrayage par rapport à la pièce d'accostage portée par le dispositif débrayeur de cet embrayage;

la figure 7 est une vue qui, analogue elle aussi à celle de la figure 2, se rapporte à une variante de réalisation de l'invention;

la figure 8 est une vue semblable à celle de la figure 7 mais relative à une variante de réalisation mettant en œuvre un organe de découplage non fendu, cet organe étant montré en coupe selon le plan VIII–VIII de la figure 9 ou 10;

les figures 9 et 10 sont des vues partielles en plan de deux formes de réalisation d'une telle variante;

la figure 11 est une vue semblable à celle de la figure 8 relative à un autre mode de mise en œuvre d'un organe de découplage de type analogue.

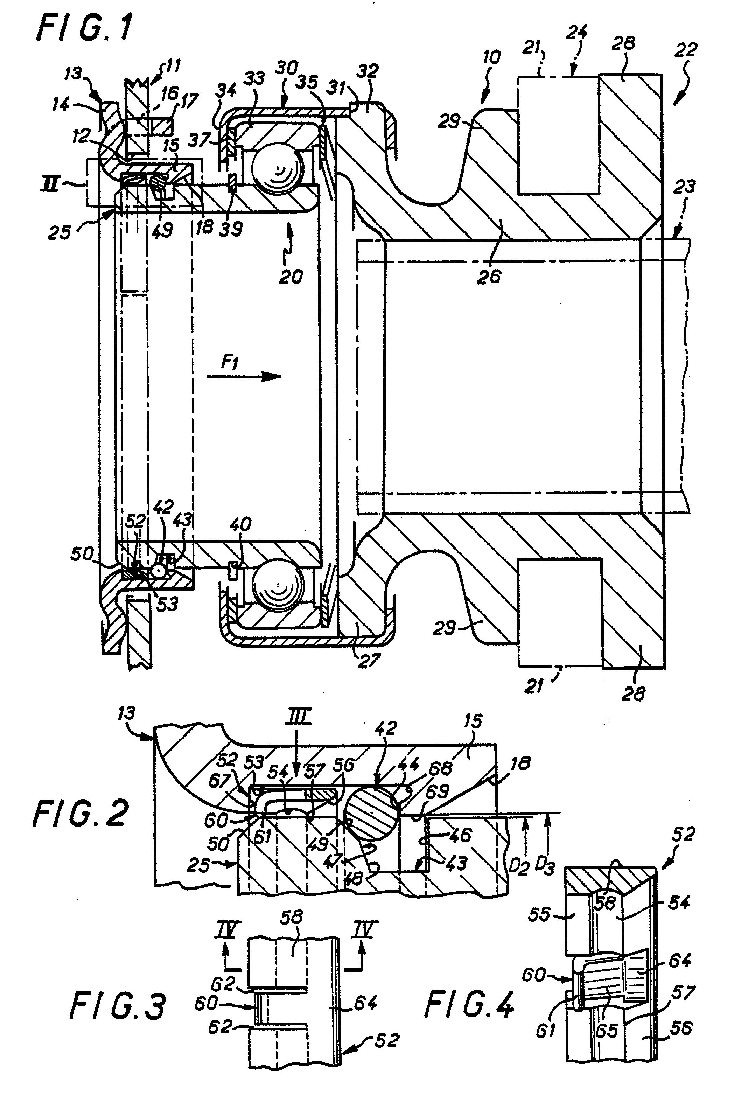

Tel qu'illustré par la figure 1, il s'agit d'atteler une butée de débrayage 10 au dispositif débrayeur 11 d'un quelconque embrayage à commander.

Dans les formes de réalisation représentées, le dispositif débrayeur 11 est, de manière connue en soi, formé par l'extrémité des doigts radiaux d'un diaphragme, c'est-à-dire d'une pièce annulaire, qui, appartenant à l'embrayage à commander, comporte une partie périphérique circulairement continue, formant rondelle Belleville, pour sollicitation en engagement de cet embrayage, et une partie centrale fragmentée en doigts radiaux par des fentes, à savoir les doigts radiaux en question, pour constitution de leviers propres à sa commande en dégagement.

De manière également connue en soi, pour l'attelage de la butée de débrayage 10 au dispositif débrayeur 11, nécessaire à une action en traction de cette butée de débrayage 10 sur ce dispositif débrayeur 11, il est rapporté sur ce dernier, à la faveur de son ouverture centrale 12, une pièce 13, dite ici par commodité pièce d'accostage.

Dans les formes de réalisation représentées, cette pièce d'accostage, ou pièce d'action, est du type de celle décrite dans la demande de brevet français déposée le 11 Avril 1983, sous le No 8 305 850, et publiée sous le No 2 544 036.

Une telle pièce d'accostage ne faisant pas partie de la présente invention, elle ne sera pas décrite en détail ici.

Il suffira d'indiquer que, du côté du dispositif débrayeur 11 opposé à la butée de débrayage 10, elle comporte radialement une collerette 14, dite collerette d'appui, pour action sur un tel dispositif débrayeur 11, ladite collerette d'appui étant convenablement profilée à cet effet, et que, d'un seul tenant avec cette collerette d'appui 14, elle comporte, d'une part, à sa périphérie interne, une douille 15, qui, s'étendant globalement axialement, traverse axialement ledit dispositif débrayeur 11, à la faveur de l'ouverture centrale 12 de celui-ci, et, d'autre part, à sa périphérie externe, de place en place le long de celle-ci, des pattes 16, qui traversent également axialement le dispositif débrayeur 11, chacune entre deux doigts radiaux adjacents de celui-ci, et qui, chacune respectivement, portent, circonférentiellement, en porte-à-faux, à leur extrémité, au droit de la collerette d'appui 14, et globalement parallèlement à celle-ci, des doigts de retenue 17 propres à assurer, en coopération avec cette collerette d'appui 14, le maintien axial de l'ensemble sur le dispositif débrayeur 11.

Tel que décrit dans le FR-A 2 544 036 mentionnée ci-dessus, la mise en place d'une telle pièce d'accostage 13 sur le dispositif débrayeur 11 se fait suivant un montage du type à baïonnette: après un rapprochement relatif suffisant de la pièce d'accostage 13 et du dispositif débrayeur 11, on assure, axialement, une flexion relative, vis-à-vis des autres, de l'extrémité de chacun des doigts radiaux du dispositif débrayeur 11 sur lequel doit circonférentiellement s'engager le doigt de retenue 17 des pattes 16 de la pièce d'accostage 13, puis on assure, circonférentiellement, une rotation relative, autour de l'axe de l'ensemble, de ladite pièce d'accostage 13 vis-à-vis dudit dispositif débrayeur 11, pour qu'un tel engagement ait effectivement lieu, et on libère ensuite les doigts radiaux précédemment fléchis du dispositif débrayeur 11.

Dans les formes de réalisation représentées, la douille axiale 15 de la pièce d'accostage 13 s'étend globalement de manière rectiligne.

A son extrémité libre, elle est, à sa périphérie interne, chanfreinée, et elle forme ainsi, pour des raisons qui apparaîtront ci-après, une portée tronconique d'engagement 18.

La butée de débrayage 10 ne fait pas non plus, en soi, partie de la présente invention.

De manière connue en soi, elle comporte, globalement, un élément d'attaque 20, par lequel elle est adaptée à agir sur le dispositif débrayeur 11, par l'intermédiaire de la pièce d'accostage 13, tel que détaillé ci-après, un élément de manœuvre 22, par lequel elle est destinée, dans les formes de réalisation représentées, et tel que schématisé en traits interrompus sur la figure 1, à être montée coulissante axialement sur un quelconque organe de guidage 23, et par lequel, et tel que également schématisé en traits interrompus sur cette figure 1, elle est par ailleurs adaptée à être actionnée par un organe de commande 24, constitué, par exemple, par une fourchette de débrayage à doigts ou bras 21, et des moyens d'attelage assujettissant axialement ledit élément d'attaque 20 audit élément de manœuvre 22.

Dans les formes de réalisation représentées, l'élément d'attaque 20 est constitué par un roulement à billes.

Pour coopération avec la pièce d'accostage 13, celui-ci comporte une pièce 25, dite ici par commodité pièce d'attaque.

Dans les formes de réalisation représentées, cette pièce d'attaque 25 est constituée par la bague interne de ce roulement à billes, celle-ci étant suffisamment prolongée axialement à cet effet en direction du dispositif débrayeur 11.

Conjointement, dans les formes de réalisation représentées, l'élément de manœuvre 22 comporte, axialement, un manchon 26, par lequel il est adapté à être engagé à coulissement sur l'organe de guidage 23, et, transversalement, d'une part, à une première extrémité dudit manchon 26, un flasque annulaire 27, pour coopération avec l'élément d'attaque 20, et, d'autre part, à l'autre extrémité de ce manchon 26, deux bras 28, pour action de l'organe de commande 24.

Pour des raisons qui apparaîtront ci-après, l'élément de manœuvre 22 comporte, en outre, parallèlement aux bras 28, à distance de ceux-ci, des bras 29, en sorte que chacun des doigts 21 de l'organe de commande 24 est encadré, d'un côté, par un bras 28 de l'organe de manœuvre 22, et, de l'autre côté, par un bras 29 de celui-ci.

Dans les formes de réalisation représentées, les moyens d'attelage assujettissant axialement l'élément d'attaque 20 à l'élément de manœuvre 22 sont constitués par un capot 30, qui, engagé par des ouvertures 31 sur des ergots 32 qui présente radialement en saillie à la périphérie de son flasque 27 l'élément de manœuvre 22, et ainsi solidaire axialement de celui-ci, s'étend au-delà de la bague externe 33 du roulement à billes constituant l'élément d'attaque 20, et comporte, au bout de cette bague externe 33, un retour en équerre 34, dirigé radialement en direction de l'axe de l'ensemble.

S'agissant, en pratique, dans les formes de réalisation représentées, d'une butée de débrayage autocentreuse à autocentrage maintenu, un jeu est laissé annulairement entre le capot 30 et le roulement à billes constituant l'élément d'attaque 20, et, entre la bague externe 33 de ce dernier et l'élément de manœuvre 22, interviennent des moyens élastiques à action axiale constitués, par exemple, tel que représenté, par une rondelle ondulée 35 du type de celle vendue sous la dénomination commerciale "ONDUFLEX".

Cette rondelle ondulée 35 sollicite axialement le roulement à billes constituant l'élément d'attaque 20 en direction du retour en équerre 34 du capot 30, pour coopération avec celui-ci par la tranche correspondante de sa bague externe 33.

En pratique, dans les formes de réalisation représentées, entre cette bague externe 33 et ce retour en équerre 34 est interposée une rondelle de frottement 37.

Enfin, dans les formes de réalisation représentées, et pour des raisons qui apparaîtront ci-après, la pièce d'attaque 25 de l'élément d'attaque 20 porte, radialement, en saillie sur sa périphérie externe, dans sa zone médiane, une rondelle d'arrêt 39, par exemple une rondelle ouverte radialement par une fente, en prise avec elle par une gorge 40 prévue à cet effet sur sa dite périphérie externe.

Ces dispositions étant bien connues par elles-mêmes, et ne faisant pas partie de la présente invention, elles ne seront pas décrites plus en détail ici.

De manière également connue en soi, entre la pièce d'attaque 25 de la butée de débrayage 10 ainsi constituée, d'une part, et la pièce d'accostage 13 portée par le dispositif débrayeur 11, d'autre part, sont établis des moyens de solidarisation en traction propres à assurer une liaison axiale entre lesdites pièces dans le sens axial qui, tel que schématisé par la flèche F1 sur la figure 1, va du dispositif débrayeur 11 à la butée de débrayage 10.

La pièce d'accostage 13 comportant axialement une douille 15, et celle-ci étant coaxiale de la pièce d'attaque 25, c'est entre cette douille 15 et cette pièce d'attaque 25 que sont établis lesdits moyens de solidarisation en traction.

Plus précisément, dans les formes de réalisation représentées, la pièce d'attaque 25 est engagée dans la douille 15 de la pièce d'accostage 13, en sorte que les moyens de solidarisation en traction en question interviennent entre la périphérie externe de cette pièce d'attaque 25 et la périphérie interne de cette douille 15.

De manière générale, ils comportent, figures 1 et 2, d'une part, un organe annulaire de couplage 42, qui est élastiquement déformable radialement, et qui est au moins partiellement engagé radialement dans une gorge annulaire de retenue 43 ménagée pour lui sur l'une quelconque des pièces 13, 25 en cause, et, d'autre part, une portée d'entraînement 44, qui est ménagée globalement transversalement sur l'autre desdites pièces 13, 25, et avec laquelle il est apte à coopérer axialement en appui dans le sens axial considéré, celui repéré par la flèche F1 sur la figure 1.

En pratique, dans la forme de réalisation plus particulièrement représentée sur les figures 1 à 6, la gorge de retenue 43 est formée sur la pièce d'attaque 25, au voisinage de l'extrémité libre de celle-ci, tandis que la portée d'entraînement 44 est formée sur la douille 15 de la pièce d'accostage 13.

En outre, l'organe de couplage 42 est formé par un simple jonc.

Par exemple, il s'agit d'une pièce de forme générale torique, ouverte radialement par une fente.

Dans la forme de réalisation représentée, le jonc formant ainsi l'organe de couplage 42 a, axialement, une section transversale circulaire, ce jonc étant par exemple réalisé par roulage d'un fil rond.

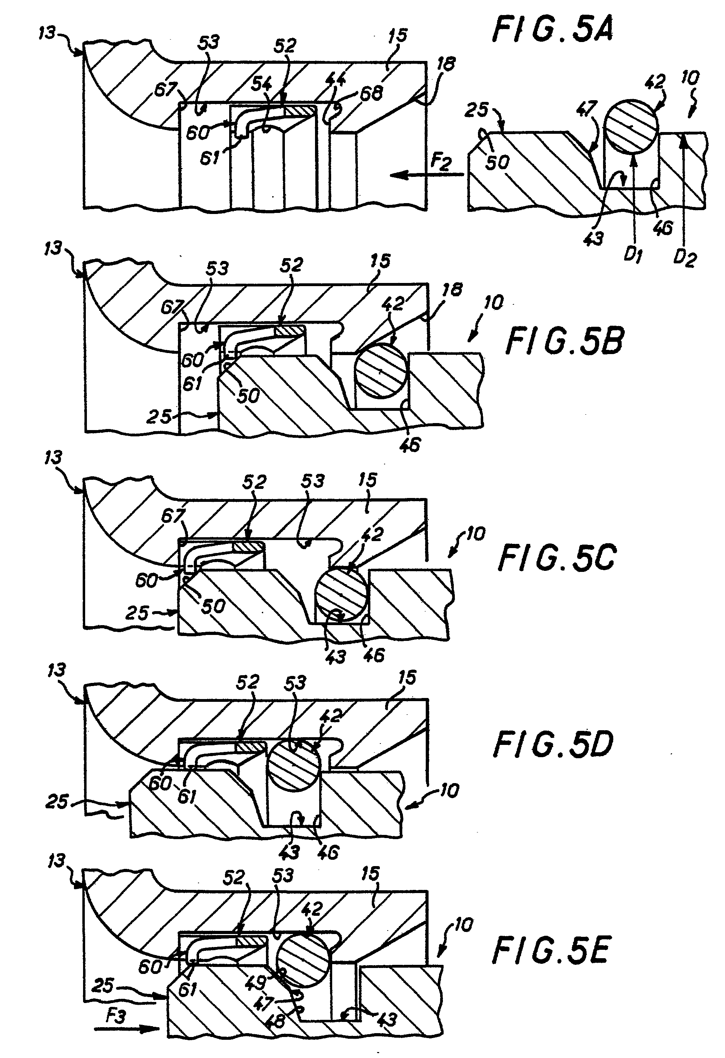

Quoi qu'il en soit, à l'état libre, figure 5A, il occupe une configuration déployée pour laquelle son diamètre intérieur D1 est inférieur à celui D2 de la périphérie externe de la pièce d'attaque sur laquelle est ménagée la gorge de retenue 43 correspondante.

Mais, du fait de la fente qu'il comporte, il peut prendre une configuration rétractée, figure 5C par exemple, pour laquelle son engagement radial dans cette gorge de retenue 43 est accentué.

En pratique, dans la forme de réalisation représentée, le flanc 46 de la gorge de retenue 43 tourné axialement du même côté que la portée d'entraînement 44 est droit.

Mais, suivant l'invention, et pour des raisons qui apparaîtront ci-après, le flanc 47 de cette gorge de retenue 43 opposé à la portée d'entraînement 44 présente, au contraire, dans la forme de réalisation représentée, à compter du fond de cette gorge de retenue 43, une première portée tronconique 48, et, faisant suite à celle-ci, une deuxième portée tronconique 49, qui est de conicité plus faible que celle de la précédente, et qui s'étend en pratique jusqu'à la périphérie externe de la pièce d'attaque 25 concernée.

Ainsi donc, dans la forme de réalisation représentée, du côté de son flanc 47, la gorge de retenue 43 va en s'évasant vers l'extérieur, de son fond à la périphérie externe de la pièce d'attaque 25.

A son extrémité libre, la pièce d'attaque 25 est chanfreinée, comme la douille 15 de la pièce d'accostage 13, et elle présente donc elle aussi, pour des raisons qui apparaîtront ci-après, une portée tronconique 50.

De manière connue en soi, il est prévu en outre un organe annulaire de découplage 52.

Cet organe de découplage 52 est monté mobile axialement dans une gorge 53, qui est ménagée pour lui sur celle des pièces 13, 25 comportant la portée d'entraînement 44, et il s'agit donc, en l'espèce, dans la forme de réalisation représentée, de la pièce d'accostage 13, et dont ladite portée d'entraînement 44 appartient à l'un des flancs.

En pratique, cette gorge 53 ouvre sur la périphérie interne de la douille 15 de la pièce d'accostage 13, laquelle a un diamètre D3 légèrement supérieur à celui D2 de la périphérie externe de la pièce d'attaque 25.

Suivant l'invention, l'organe de couplage 42 étant formé, comme indiqué ci-dessus, par un simple jonc, l'organe de découplage 52 comporte, annulairement, tournée vers la gorge de retenue 43, et donc, dans la forme de réalisation représentée, sur sa périphérie interne, une rainure 54 propre à en permettre l'accouplement débrayable avec ledit organe de couplage 42, au moins pour le sens axial allant du dispositif débrayeur 11 à la butée de débrayage 10.

En pratique, dans la forme de réalisation représentée, cette rainure 54 de l'organe de découplage 52 a, axialement, un profil au moins en partie complémentaire de celui de l'organe de couplage 42, et il s'agit donc, en l'espèce, d'un profil en portion de cercle.

En pratique, l'organe de découplage 52 se présente sous la forme générale d'un anneau relativement plat, et, dans la forme de réalisation représentée, sa rainure 54 s'étend sensiblement dans la zone médiane de sa périphérie interne.

Du côté de cette rainure 54 axialement opposée à la portée d'entraînement 44, la périphérie interne de l'organe de découplage 52 forme une portée cylindrique 55.

Mais, du côté opposé, c'est-à-dire du côté de la portée d'entraînement 44, l'organe de découplage 52 comporte, sur sa périphérie interne, en liaison avec sa rainure 54, une portée tronconique d'engagement 56, dont la concavité est tournée vers ladite portée d'entraînement 44, et qui, dans la forme de réalisation représentée, se raccorde à ladite rainure 54 par une arête 57.

Quant à la périphérie externe de l'organe de découplage 52, elle forme, uniment, dans son ensemble, une portée globalement cylindrique 58.

Ainsi, si, du côté axialement opposé à la portée d'entraînement 44, l'organe de découplage 52 a, transversalement, un profil droit, il a, du côté de cette portée d'entraînement 44, un profil globalement triangulaire.

Dans la forme de réalisation représentée, l'organe de découplage 52 présente, axialement, au moins une languette 60, dite ci-après par simple commodité languette d'entraînement, qui est élastiquement déformable radialement, et dont l'extrémité libre 61, au repos, fait radialement saillie sur celle de ses périphéries qui, tournée vers la gorge de retenue 43, présente une rainure 54, et il s'agit en l'espèce, dans la forme de réalisation représentée, et tel que précisé ci-dessus, de sa périphérie interne.

De préférence, et tel que représenté, l'extrémité libre 61 d'une telle languette d'entraînement 60 est axialement à distance de la rainure 54, en s'étendant du côté de celle-ci opposé à la portée d'entraînement 44.

Ainsi donc, c'est sur la portée cylindrique 55 formée par la périphérie interne de l'organe de découplage 52 qu'une telle extrémité libre 61 fait saillie radialement au repos.

Mais, axialement, la languette d'entraînement 60 est tout entière contenue dans le contour hors tout de l'organe de découplage 52, son extrémité libre 61 se situant en-deçà du flanc droit que forme celui-ci du côté axialement opposé à la portée d'entraînement 44.

En pratique, la languette d'entraînement 60 est d'un seul tenant avec l'organe de découplage 52, des saignées 62 la délimitant latéralement de la partie courante de cet organe de découplage 52, tandis qu'elle s'enracine axialement dans la portion de bordure de celui-ci comportant, sur sa périphérie interne, la portée tronconique 56.

Bien entendu, l'organe de découplage 52 comporte ainsi, convenablement réparties circulairement, plusieurs languettes d'entraînement 60 identiques.

Mais, seule l'une d'elles est visible sur les figures.

Pour sa mise en place dans la gorge 53, l'organe de découplage 52 est lui aussi élastiquement déformable radialement, et il est donc lui aussi ouvert radialement par une fente, figure 1.

Grâce à cette fente, visible sur la figure 1, il peut prendre une configuration rétractée lui permettant d'être engagé dans la douille 15 de la pièce d'accostage 13, et, lorsqu'il arrive ainsi au droit de la gorge 53 de celle-ci, il reprend de lui-même, élastiquement, une configuration déployée qui est sa configuration libre de repos.

Pour cette configuration déployée, la portée cylindrique 55 de sa périphérie interne a un diamètre sensiblement égal à celui D3 de la périphérie interne de la douille 15 de la pièce d'accostage 13, et donc légèrement supérieur à celui D2 de la périphérie externe de la pièce d'attaque 25.

Ainsi qu'il est aisé de le comprendre, un tel organe de découplage 52 peut par exemple être réalisé en matière synthétique, par moulage de celle-ci.

C'est pourquoi, dans la forme de réalisation représentée sur les figures 1 à 6, la portion de bordure de l'organe de découplage 52 dans laquelle s'enracine les languettes d'entraînement 60 est localement amincie, en 64, au droit de chacune de celles-ci, pour permettre le passage des poinçons nécessaires à la formation de l'extrémité libre 61 de ces languettes d'entraînement 60.

Ainsi qu'on le notera, la zone amincie 64 correspondante de l'organe de découplage 52 affleure avec la périphérie externe de celui-ci, en sorte que la partie courante 65 des languettes d'entraînement 60 s'étend elle aussi sensiblement tangentiellement à cette périphérie externe à compter de cette zone amincie 64, pour se recourber ensuite globalement à l'équerre, en direction de l'extrémité libre 61 correspondante.

Du côté axialement opposé à la portée d'entraînement 44, la gorge 53 dans laquelle est montée mobile axialement l'organe de découplage 52 a, dans la forme de réalisation représentée, un flanc droit 67, à l'image de celui, correspondant, dudit organe de découplage 52.

Mais, à la racine de celui de ses flancs auquel appartient la portée d'entraînement 44, cette gorge 53 présente, dans la forme de réalisation représentée, un dégagement 68 de profil propre à y permettre une pénétration au moins partielle de l'organe de découplage 52.

Dans la forme de réalisation représentée, ce profil est donc globalement triangulaire, à l'image de celui, correspondant, de l'organe de découplage 52.

Le dégagement 68 que présente ainsi, à la manière d'une simple piqure, la gorge 53, se raccorde à la portée d'entraînement 44, et, en liaison avec le bord libre de celle-ci, la pièce concernée, c'est-à-dire la pièce d'accostage 13, et plus précisément sa douille 15, comporte, sur sa périphérie interne, une portée cylindrique 69 laissant une épaisseur suffisante de matière entre elle et un tel dégagement 68.

Dans la forme de réalisation représentée, la portée d'entraînement 44 est sensiblement droite, transversalement par rapport à l'axe de l'ensemble, comme le flanc 67 opposé.

La pièce d'accostage 13 est équipée par avance d'un tel organe de découplage 52, dans sa gorge 53, et, d'ailleurs, cet organe de découplage 52 peut occuper axialement une place quelconque dans celle-ci, figure 5A.

De même, la pièce d'attaque 25 de l'élément d'attaque 20 de la butée de débrayage 10 est équipée par avance de l'organe de couplage 42.

Pour l'attelage de l'ensemble, la butée de débrayage 10 est engagée axialement, par sa pièce d'attaque 25, dans la douille axiale 15 de la pièce d'accostage 13, tel que schématisé par la flèche F2 sur la figure 5A.

Du fait de la portée tronconique d'engagement 18 de cette douille axiale 15, le jonc constituant l'organe de couplage 42 est contraint de se rétracter, figure 5B, ce qui en accentue l'engagement radial dans la gorge de retenue 43 de la pièce d'attaque 25.

En outre, à un moment quelconque au cours de son engagement dans la douille 15 de la pièce d'accostage 13, cette pièce d'attaque 25 vient porter, par sa portée tronconique 50, contre l'extrémité libre 61 des languettes d'entraînement 60 de l'organe de découplage 52, et, le mouvement d'engagement axial de la butée de débrayage 10 étant poursuivi, elle entraîne d'un même mouvement celui-ci avec elle, jusqu'à ce que, ledit organe de découplage 52 venant buter contre le flanc droit 67 de la gorge 53 dans laquelle il est engagé, il soit stoppé, figure 5C.

Dès lors, le mouvement axial d'engagement de la butée de débrayage 10 étant poursuivi, sa pièce d'attaque 25 contraint, grâce à sa portée tronconique 50, les languettes d'entraînement 60 à fléchir radialement en direction opposée à l'axe de l'ensemble, ce qui lui permet de s'engager sous l'extrémité libre 61 de celles-ci et de poursuivre son mouvement.

Mais, corollairement, au cours de ce mouvement axial d'engagement de la butée de débrayage 10, l'organe de couplage 42, poussé qu'il est par le flanc droit 46 de la gorge de retenue 43 de la pièce d'attaque 25 de celle-ci dans laquelle il est radialement engagé, a aussi été contraint de s'engager sous la portée cylindrique 69 de la douille 15 de la pièce d'accostage 13, figure 5C, jusqu'à pénétrer dans la gorge 53 de cette dernière.

Dès lors libéré, l'organe de couplage 42 tend à reprendre dans cette gorge 53 sa configuration déployée, et, le cas échéant, tel que représenté, il vient donc porter contre le fond de cette gorge 53.

Mais, en variante, il peut aussi bien demeurer à distance de celui-ci.

Bien entendu, le déploiement de l'organe de couplage 42 intervient dès que celui-ci a franchi la portée d'entraînement 44.

Mais, en pratique, et tel que le schématise le jeu apparaissant à la figure 5D entre cet organe de couplage 42 et la portée d'entraînement 44, le mouvement axial d'engagement imprimé à la butée de débrayage 10 est volontairement prolongé d'une surcourse, pour être sûr que cet organe de couplage 42 a ainsi bien franchi axialement ladite portée d'entraînement 44.

Quoi qu'il en soit, il suffit, ensuite, pour l'attelage recherché, d'inverser, suivant la flèche F3 de la figure 5E, le mouvement axial imprimé à la butée de débrayage 10.

La pièce d'attaque 25 de celle-ci vient alors porter contre l'organe de couplage 42 par la portée tronconique 49 du flanc 47 de sa gorge de retenue 43, et, refoulant cet organe de couplage 42 en direction de la portée d'entraînement 44, elle vient l'appliquer axialement contre celle-ci.

L'attelage ou couplage, recherché, est alors assuré: si, suivant la flèche F1 de la figure 1, qui correspond à la flèche F3 de la figure 5E, une action de traction est exercée sur la butée de débrayage 10 par l'organe de commande 24, cette action de traction est transmise au dispositif débrayeur 11 à travers successivement l'organe de couplage 42 et la pièce d'accostage 13.

Ainsi qu'on le notera, lorsque l'organe de couplage 42 est ainsi en prise avec la portée d'entraînement 44 de la pièce d'accostage 13, c'est par la portée tronconique 49 du flanc 47 de sa gorge de retenue 43, celle ayant la conicité la plus faible, que la pièce d'attaque 25 fournit un appui à cet organe de couplage 42.

Ainsi qu'il est aisé de le comprendre, le mouvement axial qu'il est nécessaire d'appliquer à la butée de débrayage 10, d'abord dans un sens puis dans l'autre, pour un tel couplage, peut avantageusement lui être imprimé en aveugle à l'aide de l'organe de commande 24, les doigts 21 de celui-ci agissant alors d'abord sur les bras 29 de l'organe de manœuvre 22 de cette butée de débrayage 10 puis sur ses bras 28.

Il en est de même pour le découplage.

Dans un premier temps, et suivant la flèche F4 de la figure 6A, il est procédé à nouveau à un engagement axial de la butée de débrayage 10 dans la douille 15 de la pièce d'accostage 13, en sorte que, par le flanc 46 de sa gorge de retenue 43, sa pièce d'attaque 25 entraîne vers l'organe de découplage 52 l'organe de couplage 42.

Cet entraînement étant poursuivi, l'organe de couplage 42 prend contact avec l'organe de découplage 52 par la portée tronconique 56 de celui-ci, et, l'organe de découplage 52 se trouvant axialement en butée contre le flanc droit 67 de la gorge 53 dans laquelle il est disposé, et donc fixe, l'organe de couplage 42 se trouve contraint, par cet organe de découplage 52, à se rétracter.

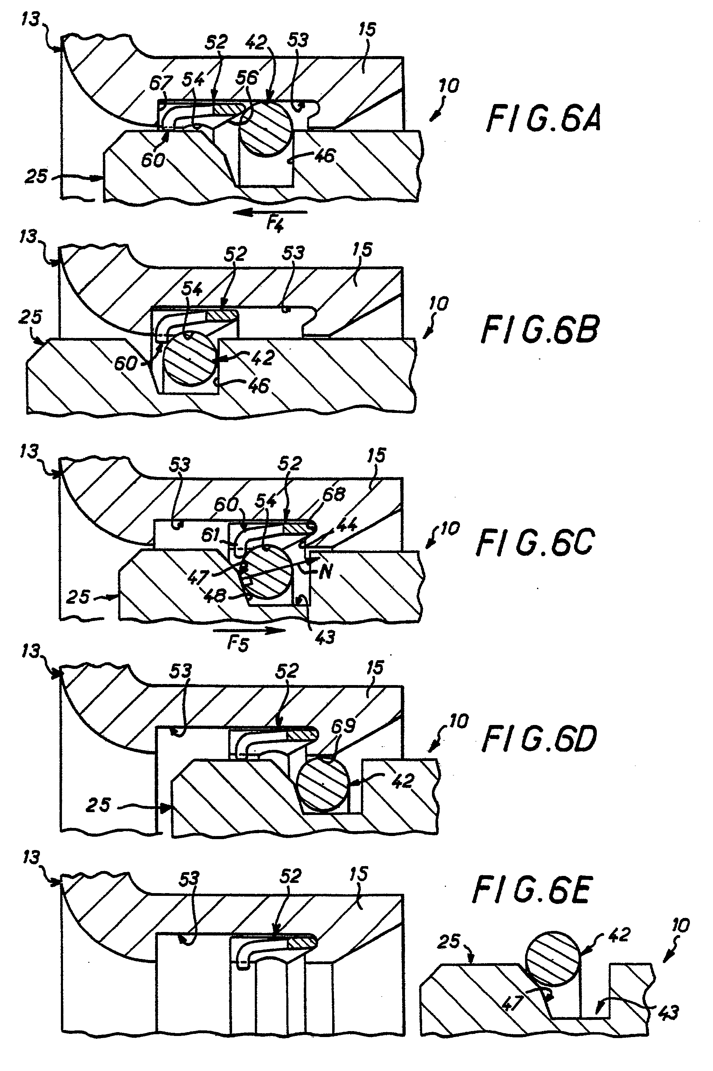

Guidé par la portée tronconique 56 de l'organe de découplage 52, il finit par pénétrer dans la gorge annulaire 54 de celui-ci, après franchissement de l'arête 57 séparant cette rainure annulaire 54 de cette protée tronconique 56, figure 6B.

L'organe de couplage 42 étant dès lors ainsi accouplé, mais de manière débrayable, à l'organe de découplage 52, il est imprimé à la butée de débrayage 10 un mouvement axial inverse du précédent, suivant la flèche F5 de la figure 6C.

Par le flanc 47 de sa gorge de retenue 43, la pièce d'attaque 25 vient porter sur l'organe de couplage 52, et, le mouvement axial de la butée de débrayage 10 étant poursuivi, elle entraîne avec elle l'équipage formé conjointement par cet organe de couplage 42 et l'organe de découplage 52 en prise avec celui-ci, jusqu'à ce que, tel que représenté à la figure 6C, cet organe de découplage 52, partiellement engagé dans le dégagement 68 de la gorge 53, se trouve en butée contre l'extrémité correspondante de celle-ci.

Or, quand l'organe de couplage 42 est ainsi en prise avec l'organe de découplage 52, c'est par la portée tronconique 48 du flanc 47 de sa gorge de retenue 43 que la pièce d'attaque 25 porte alors sur cet organe de couplage 42.

Par construction, la conicité de cette portée tronconique 48 est telle que, lorsque, comme indiqué, l'organe de découplage 52 est en butée contre celui des flancs de la gorge 43 auquel appartient la portée d'entraînement 44, la normale N à cette portée tronconique 48 le long de la ligne de contact entre l'organe de couplage 42 et elle s'étend à l'écart de la rainure 54 de l'organe de découplage 52.

De préférence, et tel que représenté, cette normale N s'étend même également à l'écart de la gorge 53.

Quoi qu'il en soit, si le mouvement axial en cours de la butée de débrayage 10 est poursuivi, figure 6D, il résulte de cette disposition que la sollicitation dont est l'objet l'organe de couplage 42 de la part de la pièce d'attaque 25 conduit cet organe de couplage 42 à échapper à la rainure 54 de l'organe de découplage 52.

Il ne peut dès lors que prendre contact avec la portée cylindrique 69 de la douille 15 de la pièce d'accostage 13, figure 6D.

Ainsi qu'on le comprendra, la prise de contact de l'organe de couplage 42 avec cette portée cylindrique 69 se trouve facilitée, d'une part, par le fait que, par l'engagement de l'organe de découplage 52 dans le dégagement 68 prévu dans le gorge 53 à la base de la portée d'entraînement 44, l'intervalle séparant axialement la rainure 54 de l'organe de découplage 52 de cette portée cylindrique 69 de la pièce d'accostage 13 se trouve avantageusement réduit, et, d'autre part, par le fait que la normale N précisée ci-dessus s'étend elle aussi préférentiellement à l'écart de cette gorge 53.

Le mouvement axial en cours de la butée de débrayage 10 étant poursuivi, l'organe de couplage 42 échappe alors à la pièce d'accostage 13, figure 6E.

Le découplage recherché est ainsi assuré.

Mais un nouveau couplage est possible, suivant le processus précédemment décrit.

Ainsi donc, il est possible, suivant l'invention, d'assurer de manière réversible un tel couplage et un tel découplage.

A chaque fois, il y a, suivant le processus décrit, un accouplement débrayable de l'organe de couplage avec l'organe de découplage, suivi de leur désaccouplement, et, en pratique, dans la forme de réalisation représentée, cet accouplement est propre aussi bien à un entraînement de l'ensemble dans le sens axial allant du dispositif débrayeur de l'embrayage concerné à la butée de débrayage que dans le sens axial opposé, même s'il n'est opérationnel que dans le premier de ces sens.

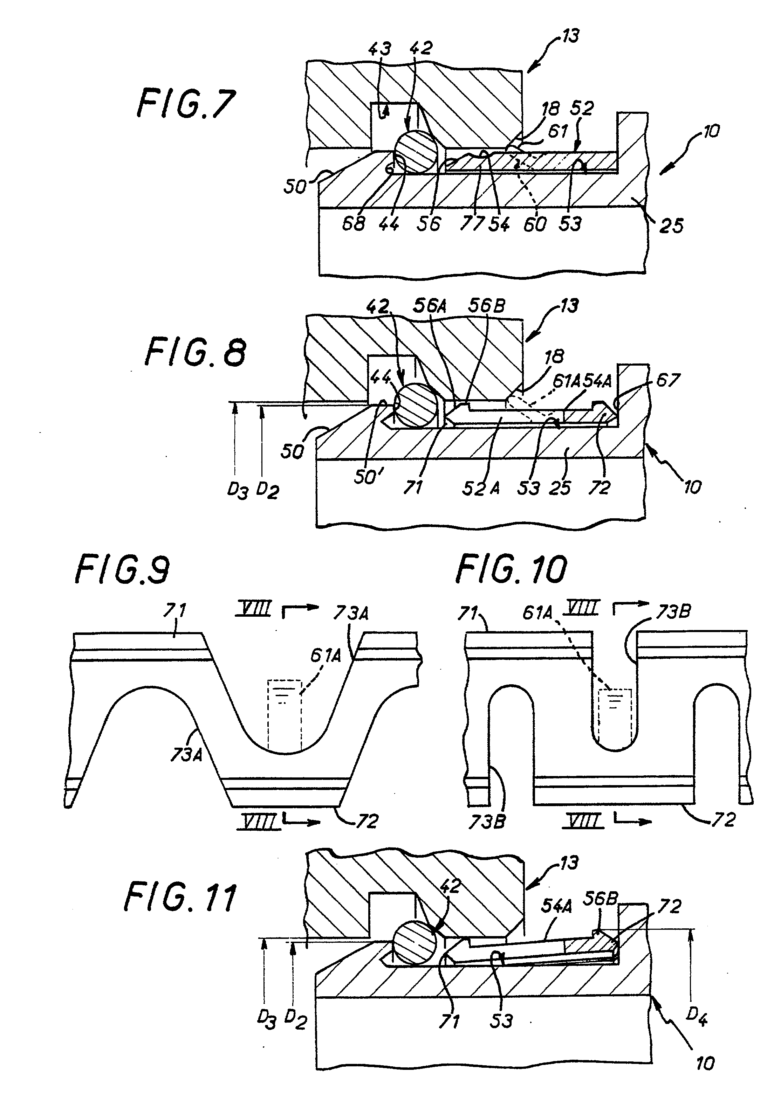

Suivant la variante de réalisation illustrée par la figure 7, au lieu d'être porté par la pièce d'attaque 25 de la butée de débrayage 10, l'organe de couplage 42 est porté par la pièce d'accostage 13, la gorge de retenue 43 étant formée à cet effet dans celle-ci.

Conjointement, la portée d'entraînement 44 correspondante est formée par la pièce d'attaque 25 de la butée de débrayage 10, et l'organe de découplage 52 est porté par celle-ci, la gorge 53 dans laquelle est monté mobile axialement cet organe de découplage 52 étant formée sur cette pièce d'attaque 25, à la périphérie externe de celle-ci.

Les dispositions sont alors du même type que les précédentes: en particulier, portées tronconiques 48, 49 sur le flanc 47 de la gorge de retenue 43 opposé à la portée d'entraînement 44, dégagement 68 à la base de celle-ci, et, sur l'organe de découplage 52, rainure 54, portée tronconique d'engagement 56 et languettes d'entraînement 60.

Mais, à la différence des dispositions précédentes, les languettes d'entraînement 60, dont l'extrémité libre 61 fait saillie au repos sur la périphérie externe de l'organe de découplage 52, s'étendent axialement en direction de la portée d'entraînement 44, et elles alternent avec des pattes axiales 77, qui forment la partie courante correspondante de l'organe de découplage 52, et sur lesquelles sont formées la rainure 54 et la portée tronconique d'engagement 56.

Le fonctionnement est également globalement le même que celui décrit ci-dessus; lors d'un couplage, les languettes d'entraînement 60 de l'organe de découplage 52 viennent dans un premier temps en butée par leur extrémité libre 61 contre la portée tronconique d'engagement 18 de la pièce d'accostage 13 avant de s'escamoter élastiquement dans celle-ci, cependant que par sa portée tronconique d'engagement 50, la pièce d'attaque 25 de la butée de débrayage 10 contraint l'organe de couplage 42 à franchir élastiquement la portée d'entraînement 44 et gagner ainsi sa gorge 53; et, au découplage, l'organe de couplage 42 vient temporairement se loger de manière débrayable dans la rainure 54 que présente transversalement à cet effet l'organe de découplage 52.

Dans les organes de découplage 53 qui viennent d'être considérés, l'élasticité radiale requise pour leur mise en place dans la gorge 53 était obtenue au moyen d'une ouverture radiale par une fente. Les figures 8 à 11 illustrent des modes de réalisation dans lesquels une pareille ouverture radiale par une fente n'est plus nécessaire.

Les figures 8 et 9, montrent une variante mettant en œuvre un organe de découplage 52A présentant une rainure 54A à fond plat entre des flancs droits formés par des tranches d'extrémité 71, 72 présentant une section transversale de forme générale triangulaire avec une portée tronconique d'engagement 56A raccordée à la rainure 54A par une portée cylindrique 56B. Comme il est visible sur la figure 9 les deux tranches 71, 72 sont chacune festonnées par des échancrures 73A qui, circulairement alternées de l'une à l'autre des tranches, sont axialement imbriquées de l'une à l'autre.

Ces échancrures confèrent à la structure annulaire de l'organe de découplage une aptitude à la déformation élastique en sens radial permettant sa mise en place sur la pièce associée, en l'occurrence la pièce d'attaque 25, avec franchissement successif de la rampe d'engagement 50 et de la portée cylindrique 50' par ses deux moitiés axiales.

Le comportement à cet égard demeure tout à fait semblable dans le cas d'une forme de réalisation du genre illustré à la figure 10 qui diffère de celle de la figure 9 par la forme des échancrures 73B, celles-ci étant des fentes à flancs parallèles, tandis que les échancrures selon la figure 9 sont assez arrondies et assez largement évasées.

La structure en coupe illustrée à la figure 8 demeure dans ces deux types de cas avec un fonctionnement globalement équivalent à celui qui était considéré ci-dessus en référence à la figure 7. Les dimensions globales hors-tout de l'organe de découplage étant supposées inchangées, il est possible de prévoir ici encore la formation de quelques languettes d'entraînement 61A: celles-ci, comme indiqué simplement en pointilliés, peuvent être ménagées à partir du fond de quelques échancrures 73A tournées vers la tranche 71 et pour des raisons de symétrie on peut ménager autant de languettes au départ d'échancrures complémentaires en direction de la tranche 72.

Cependant, ces languettes d'entraînement ne sont nullement indispensables, le simple frottement sur la pièce d'accostage 13 pouvant être suffisant pour assurer l'entraînement axial de l'organe de découplage dans la gorge 53 de la pièce d'attaque 25 vers le flanc 67 opposé à la portée d'entraînement 44.

Les languettes d'entraînement indiquées en 61A deviennent totalement inutiles dans le mode de mise en œuvre illustré à la figure 11: celui-ci diffère du précédent par le fait que le diamètre $D_4$ du cylindre tangent aux sommets 56B des tranches d'extrémité 71, 72 est choisi légèrement supérieur au diamètre interne $D_3$ de la pièce d'accostage 13. Dans ces conditions, c'est l'ensemble de la tranche 71 engagée dans la pièce d'accostage qui forme un moyen positif d'entraînement par la totalité de ses éléments formant en quelque sorte un cercle complet de languettes déterminées par les échancrures 73A et qui toutes subissent une déflexion élastique radialement vers l'intérieur, le jeu ménagé entre la paroi interne de l'organe de découplage et le fond de la gorge 53 étant alors augmenté en conséquence.

Le même type d'organe de découplage peut naturellement être envisagé dans le cas du mode de réalisation du genre illustré aux figures 1 à 6: les saillies 56B sont bien entendu tournées dans ce cas radialement vers l'intérieur pour coopérer avec la périphérie externe de la pièce d'attaque 10 portant alors l'organe d'accouplement 42.

## Revendications

1. Montage de butée de débrayage, du genre comportant, pour l'attelage d'une butée de débrayage (10) au dispositif débrayeur (11) d'un embrayage, une pièce (13), dite ici par commodité pièce d'accostage, qui est convenablement rapportée sur ledit dispositif débrayeur (11), et des moyens de solidarisation en traction, qui, établis entre la pièce d'accostage (13) et une pièce (25), dite ici par commodité pièce d'attaque, appartenant à la butée de débrayage (10), sont propres à assurer une liaison axiale entre lesdites pièces (13, 25) dans le sens axial allant du dispositif débrayeur (11) à ladite butée de débrayage (10), lesdits moyens de solidarisation en traction comportant, d'une part, un organe annulaire de couplage (42), élastiquement déformable radialement, qui est au moins partiellement engagé radialement dans une gorge annulaire de retenue (43) ménagée pour lui sur l'une quelconque desdites pièces (13, 25), et, d'autre part, une portée d'entraînement (44), qui est ménagée globalement transversalement sur l'autre de celles-ci, et avec laquelle ledit organe de couplage (42) est apte à coopérer axialement en appui dans le sens axial considéré, et du genre comportant également, pour le découplage de la butée de débrayage (10) par rapport au dispositif débrayeur (11) de l'embrayage concerné, un organe annulaire de découplage (52) monté mobile axialement dans une gorge (53), qui est ménagée pour lui sur celle des pièces (13, 25) comportant la portée d'entraînement (44), et dont ladite portée d'entraînement (44) appartient à l'un des flancs, caractérisé en ce que, l'organe de couplage (42) étant formé par un jonc, l'organe de découplage (52) comporte annulairement, tournée vers la gorge de retenue (43), une rainure (54) propre à en permettre l'accouplement débrayable avec ledit organe de couplage (42), au moins pour le sens axial allant du dispositif débrayeur à la butée de débrayage.

2. Montage de butée de débrayage suivant la revendication 1, caractérisé en ce que, axialement, la rainure (54) de l'organe de découplage (52) a un profil au moins en partie complémentaire de celui de l'organe de couplage (42).

3. Montage de butée de débrayage suivant l'une quelconque des revendications 1, 2, caractérisé en ce que, en liaison avec sa rainure (54), l'organe de découplage (52) comporte une portée tronconique d'engagement (56), dont la concavité est tournée vers la portée d'entraînement (44).

4. Montage de butée de débrayage suivant l'une quelconque des revendications 1 à 3, caractérisé en ce que la gorge (53) dans laquelle est monté mobile axialement l'organe de découplage (52) présente, à la racine de celui de ses flancs auquel appartient la portée d'entraînement (44), un dégagement (68) de profil propre à y permettre une pénétration au moins partielle dudit organe de découplage (52).

5. Montage de butée de débrayage suivant la revendication 4, caractérisé en ce que le profil dudit dégagement (68) est globalement triangulaire, et la pièce concernée présente, en liaison avec le bord libre de la portée d'entraînement (44) qu'elle comporte, une portée cylindrique (69).

6. Montage de butée de débrayage suivant l'une quelconque des revendications 1 à 5, caractérisé en ce que l'organe de découplage (52) présente, axialement, au moins une languette (60), dite ci-après par simple commodité languette d'entraînement, qui est élastiquement déformable radialement, et dont l'extrémité libre (61), au repos, fait radialement saillie sur celle de ses périphéries qui, tournée vers la gorge de retenue (43), présente une rainure (54).

7. Montage de butée de débrayage suivant la revendication 6, caractérisé en ce que l'extrémité libre (61) de ladite languette d'entraînement (60) est axialement à distance de la rainure (54).

8. Montage de butée de débrayage suivant la revendication 7, caractérisé en ce que l'extrémité libre (61) de ladite languette d'entraînement (60) s'étend du côté de la rainure (54) opposé à la portée d'entraînement (44).

9. Montage de butée de débrayage suivant l'une quelconque des revendications 6 à 8, caractérisé en ce que ladite languette d'entraînement (60) est d'un seul tenant avec l'organe de découplage (52), des saignées (62) la délimitant latéralement de la partie courante de celui-ci.

10. Montage de butée de débrayage suivant l'une quelconque des revendications 6 à 9, caractérisé en ce que, axialement, ladite languette d'entraînement (60) est tout entière contenue dans le contour hors tout de l'organe de découplage (52).

11. Montage de butée de débrayage suivant l'une quelconque des revendications 6 à 10, caractérisé en ce que l'organe de découplage (52) comporte, réparties circulairement, plusieurs languettes d'entraînement (60).

12. Montage de butée de débrayage suivant l'une quelconque des revendications 1 à 11, caractérisé en ce que le flanc (47) de la gorge de retenue (43) opposé à la portée d'entraînement (44) présente une portée tronconique (48), qui est propre à l'appui de l'organe de couplage (42) lorsque celui-ci est en prise avec l'organe de découplage (52), et dont la conicité est telle que, lorsque ledit organe de découplage (52) est en butée contre celui des flancs de la gorge (53) dans laquelle il est monté mobile axialement auquel appartient ladite portée d'entraînement (44), la normale (N) à ladite portée tronconique (48) le long de la ligne de contact entre l'organe de couplage (42) et celle-ci s'étend à l'écart de la rainure (54) de l'organe de découplage (52).

13. Montage de butée de débrayage suivant la revendication 12, caractérisé en ce que ladite normale (N) s'étend également à l'écart de la gorge (53) dans laquelle est monté mobile axialement l'organe de découplage (52).

14. Montage de butée de débrayage suivant l'une quelconque des revendications 12, 13, caractérisé en ce que le flanc (47) de la gorge de retenue (43) opposé à la portée d'entraînement (44) présente une autre portée tronconique (49), de conicité plus faible que celle de la précédente, pour appui de l'organe de couplage (42) lorsque celui-ci est en prise avec ladite portée d'entraînement (44).

15. Montage de butée de débrayage suivant l'une quelconque des revendications 1 à 14, caractérisé en ce que l'extrémité libre de la pièce d'attaque (25) est chanfreinée.

16. Montage de butée de débrayage selon l'une quelconque des revendications 1 à 5, caractérisé en ce que l'organe de découplage est une pièce annulaire présentant, régulièrement réparties, le long de l'une et l'autre de ses tranches axiales d'extrémité, des échancrures (73A ou B) qui, circulairement alternées de l'une à l'autre de ces tranches sont axialement imbriquées d'une à l'autre de celles-ci.

17. Montage de butée de débrayage selon la revendication 16, caractérisé en ce que la rainure (54) de l'organe de découplage présente axialement un profil quadrangulaire.

18. Montage de butée de débrayage selon la revendication 17, caractérisé en ce que l'organe de découplage présente axialement un profil symétrique par rapport à un plan radial médian avec deux tranches d'éxtrémité (71, 72) en saillie vers celle des pièces (13, 25) qui est adaptée à porter l'organe de couplage (42).

**Patentansprüche**

1. Kupplungsausrücklageranordnung der Art, die zur Ankopplung eines Kupplungsausrücklagers (10) an die Ausrückvorrichtung (11) einer Kupplung ein Element (13) aufweist, welches hier der Einfachheit halber als Kopplungsstück bezeichnet wird und auf zweckmäßige Weise an der genannten Ausrückvorrichtung (11) angebracht ist, sowie Zugverbindungselemente, die zwischen dem Kopplungsstück (13) und einem Element (25), welches hier der Einfachheit halber als Treibelement bezeichnet wird und zum Kupplungsausrücklager (10) gehört, angeordnet und geeignet sind, eine axiale Verbindung zwischen den genannten Elementen (13, 25) in der axialen Richtung zu gewährleisten, die von der Ausrückvorrichtung (11) zum genannten Kupplungsausrücklager (10) verläuft, wobei die genannten Zugverbindungselemente einerseits ein in radialer Richtung elastisch verformbares, ringförmiges Verbindungsorgan (42) enthalten, welches wenigstens teilweise radial in eine ringförmige Halterille (43) eingreift, welche dafür an einem der genannten Elemente (13, 25) vorgesehen ist, und andererseits eine Antriebsfläche (44), die im wesentlichen in Querrichtung an dem jeweils anderen Element vorgesehen ist und wodurch das genannte Verbindungsorgan (42) axial in der betreffenden Längsrichtung aufliegen kann, sowie von der Art, die für die Entkopplung des Kupplungsausrücklagers (10) aus der Ausrückvorrichtung (11) der betreffenden Kupplung auch ein ringförmiges Entkopplungsorgan (52) enthält, welches in Längsrichtung beweglich in einer Rille (53) angebracht ist, die dafür auf demjenigen der Elemente (13, 25) vorgesehen ist, welches die Antriebsfläche (44) aufweist, wobei die genannte Antriebsfläche (44) zu einer der Flanken gehört, dadurch gekennzeichnet, daß das Verbindungsorgan (42) aus einem Ring besteht und das Entkopplungsorgan (52) daher ringförmig und der Halterille (43) zugewandt eine Nut (54) aufweist, die eine ausrückbare Ankopplung an das genannte Verbindungsorgan (42) gestattet, zumindest in der axialen Richtung, die von der Ausrückvorrichtung zum Kupplungsausrücklager verläuft.

2. Kupplungsausrücklageranordnung gemäß Anspruch 1, dadurch gekennzeichnet, daß die Nut (54) des Entkopplungsorgans (52) axial ein Profil aufweist, welches wenigstens teilweise das Profil des Verbindungsorgans (42) ergänzt.

3. Kupplungsausrücklageranordnung gemäß einem der Ansprüche 1, 2, dadurch gekennzeichnet, daß das Entkopplungsorgan (52) in Verbindung mit der betreffenden Nut (54) eine kegelstumpfförmige Eingriffsfläche (56) aufweist, deren Aushöhlung der Antriebsfläche (44) zugewandt ist.

4. Kupplungsausrücklageranordnung gemäß einem der Ansprüche 1 bis 3, dadurch gekennzeichnet, daß die Rille (53), in der das Entkopplungsorgan (52) axial beweglich angebracht ist, an der Wurzel derjenigen Flanke, zu der die Antriebsfläche (44) gehört, einen Absatz (dégagement) (68) aufweist, dessen Profil wenigstens die teilweise Einführung des genannten Entkopplungsorgans (52) gestattet.

5. Kupplungsausrücklageranordnung gemäß Anspruch 4, dadurch gekennzeichnet, daß das Profil des genannten Absatzes (68) im wesentlichen dreieckig ist und das betreffende Element in Verbindung mit der freien Kante der Antriebsfläche (44), die das Element trägt, eine zylinderförmige Fläche (69) aufweist.

6. Kupplungsausrücklageranordnung gemäß einem der Ansprüche 1 bis 5, dadurch gekennzeichnet, daß das Entkopplungsorgan (52) in axialer Richtung wenigstens eine Lasche (60) aufweist, die nachstehend der Einfachheit halber als Antriebslasche bezeichnet wird und die in radialer Richtung elastisch verformbar ist und deren freies Ende (61) im Ruhezustand radial an derjenigen Peripherie vorsteht, die, wenn sie der Halterille (43) zugewandt ist, eine Nut (54) aufweist.

7. Kupplungsausrücklageranordnung gemäß Anspruch 6, dadurch gekennzeichnet, daß das freie Ende (61) der genannten Antriebslasche (60) axial einen Abstand zur Nut (54) aufweist.

8. Kupplungsausrücklageranordnung gemäß Anspruch 7, dadurch gekennzeichnet, daß das freie Ende (61) der genannten Antriebslasche (60) von der Seite der Nut (54) ausgeht, die der Antriebsfläche (44) gegenüberliegt.

9. Kupplungsausrücklageranordnung gemäß einem der Ansprüche 6 bis 8, dadurch gekennzeichnet, daß die genannte Antriebslasche (60) aus einem Stück mit dem Entkopplungsorgan (52) besteht, wobei sie seitlich durch Einschnitte (62) vom durchgehenden Teil des Organs abgegrenzt ist.

10. Kupplungsausrücklageranordnung gemäß einem der Ansprüche 6 bis 9, dadurch gekennzeichnet, daß die genannte Antriebslasche (60) in axialer Richtung vollständig im Umfang (contour) des Entkopplungsorgans (52) enthalten ist.

11. Kupplungsausrücklageranordnung gemäß einem der Ansprüche 6 bis 10, dadurch gekennzeichnet, daß das Entkopplungsorgan (52) mehrere Antriebslaschen (60) aufweist, die kreisförmig verteilt sind.

12. Kupplungsausrücklageranordnung gemäß einem der Ansprüche 1 bis 11, dadurch gekennzeichnet, daß die Flanke (47) der Halterille (43), die der Antriebsfläche (44) gegenüberliegt, eine kegelstumpfförmige Fläche (48) aufweist, die eine Auflage des Verbindungsorgans (42) gestattet, wenn dieses mit dem Entkopplungsorgan (52) in Eingriff steht, wobei die Konizität so beschaffen ist, daß, wenn das genannte Entkopplungsorgan (52) an den Flanken der Rille (53) anschlägt, worin es in axialer Richtung beweglich angebracht ist und wozu die genannte Antriebsfläche (44) gehört, die Senkrechte (N) zur genannten kegelstumpfförmigen Fläche (48) entlang der Berührungslinie zwischen Verbindungsorgan (42) und derselben in einem Abstand zu der Nut (54) des Entkopplungsorgans (52) verläuft.

13. Kupplungsausrücklageranordnung gemäß Anspruch 12, dadurch gekennzeichnet, daß die genannte Senkrechte (N) ebenfalls im Abstand zu der Rille (53) verläuft, in der das Entkopplungsorgan (52) in axialer Richtung beweglich angebracht ist.

14. Kupplungsausrücklageranordnung gemäß einem der Ansprüche 12, 13, dadurch gekennzeichnet, daß die Flanke (47) der Halterille (43), die der Antriebsfläche (44) gegenüberliegt, eine weitere kegelstumpfförmige Fläche (49) aufweist, deren Konizität geringer ist als die vorgenannte, für die Auflage des Verbindungsorgans (42), wenn dieses mit der genannten Antriebsfläche (44) in Eingriff steht.

15. Kupplungsausrücklageranordnung gemäß einem der Ansprüche 1 bis 14, dadurch gekennzeichnet, daß das freie Ende des Treibelements (25) abgeschrägt ist.

16. Kupplungsausrücklageranordnung gemäß einem der Ansprüche 1 bis 5, dadurch gekennzeichnet, daß das Entkopplungsorgan ein ringförmiges Stück ist, welches, in regelmäßigen Abständen längs des einen und des anderen der axialen Abschlußränder verteilt, halbmondförmige Aussparungen (73A oder B) aufweist, die rundherum zwischen dem einen und dem anderen dieser Ränder abwechselnd axial zwischen diesen überlappt sind.

17. Kupplungsausrücklageranordnung gemäß Anspruch 16, dadurch gekennzeichnet, daß die Nut (54) des Entkopplungsorgans in Längsrichtung ein viereckiges Profil aufweist.

18. Kupplungsausrücklageranordnung gemäß Anspruch 17, dadurch gekennzeichnet, daß das Entkopplungsorgan axial ein symmetrisches Profil im Verhältnis zu einer mittleren radialen Ebene aufweist, wobei zwei Abschlußränder (71, 72) zum Rand der Elemente (13, 25) hin vorspringen, worauf das Verbindungsorgan (42) aufliegen kann.

## Claims

1. A clutch release bearing assembly of the kind comprising, to attach a clutch release bearing (10) to a clutch release device (11), a part (13), called hereinafter for convenience a coupling part, which is appropriately attached to the said clutch release device (11), and fastening means operative in traction which are disposed between the coupling part (13) and a part (25), called hereinafter for convenience a drive part, forming part of the clutch release bearing (10), and are adapted to connect together the said parts (13, 25) in the axial direction going from the clutch release device (11) to the said clutch release bearing (10), the said fastening means operative in traction comprising, on the one hand, an annular coupling member (42), elastically deformable radially, which is at least partly engaged radially in an annular retaining groove (43) made for it in one of the said parts (13, 25) and, on the other hand, a drive bearing surface (44) which is made substantially transversely on the other of the said parts, and with which the said coupling member (42) is adapted to bear axially in the said axial direction, and of the kind also comprising, to decouple the clutch release bearing (10) from the clutch release device (11) of the clutch concerned, an annular decoupling member (52) mounted movable axially in a groove (53) made for it in that of the said parts (13, 25) comprising the drive bearing surface (44), part of one flank of which groove is formed by the said drive bearing surface (44), characterized in that the coupling member (42) being formed by a retaining ring, the decoupling member (52) comprises an annular groove (54) facing the retaining groove (43) adapted to enable releasable coupling with the said coupling member (42) at least in the axial direction going from the clutch release device to the clutch release bearing.

2. A clutch release bearing assembly according to Claim 1, characterized in that the groove (54) in the decoupling member (52) has an axial profile at least partly complementary to that of the coupling member (42).

3. A clutch release bearing assembly according to anyone of Claims 1 of 2, characterized in that, communicating with its groove (54), the decoupling member (52) comprises a frustoconical engagement bearing surface (56) the concave side of which faces the drive bearing surface (44).

4. A clutch release bearing assembly according to any one of Claims 1 to 3, characterized in that the groove (53) in which the decoupling member (52) is mounted axially movable comprises, at the base of that of its flank of which the drive bearing surface (44) forms part, a recess (68) having a profile adapted to enable at least part of the said decoupling member (52) to enter it.

5. A clutch release bearing assembly according to Claim 4, characterized in that the profile of the said recess (68) is substantially triangular and the part concerned comprises a cylindrical bearing surface (69) communicating with the free edge of the drive bearing surface (44) which it comprises.

6. A clutch release bearing assembly according to any one of Claims 1 to 5, characterized in that the decoupling member (52) comprises at least one axial tongue (60), hereinafter called for convenience a drive tongue (60), which is elastically deformable radially and the free end (61) of which, when unstressed, projects radially from that of its peripheries which, facing the retaining groove (43), comprises a groove (54).

7. A clutch release bearing assembly according to Claim 6, characterized in that the free end (61) of the said drive tongue (60) is axially spaced from the groove (54).

8. A clutch release bearing assembly according to Claim 7, characterized in that the free end (61) of the said drive tongue (60) extends from the side of the groove (54) opposite the drive bearing surface (44).

9. A clutch release bearing assembly according to any one of Claims 6 to 8, characterized in that the said drive tongue (60) is in one piece with the decoupling member (52), grooves (62) delimiting it laterally from the main part of the latter.

10. A clutch release bearing assembly according to any one of Claims 6 to 9, characterized in that in the axial direction the said drive tongue (60) is entirely disposed within the overall contour of the decoupling member (52).

11. A clutch release bearing assembly according to any one of Claims 6 to 10, characterized in that the decoupling member (52) comprises a plurality of circumferentially distributed drive tongues (60).

12. A clutch release bearing assembly according to any one of Claims 1 to 11, characterized in that the flank (47) of the retaining groove (43) opposite the drive bearing surface (44) comprises a frustoconical bearing surface (48), adapted to bear the coupling member (42) when the latter is engaged with the decoupling member (52), and the cone angle of which is such that when the said decoupling member (52) is in abutment with that flank of the groove (53) in which it is mounted axially movable, and of which the said drive bearing surface (44) forms part, the normal (N) to the said frustoconical bearing surface (48) along the line of contact between the coupling member (42) and the bearing surface extends at a distance from the groove (54) in the decoupling member (52).

13. A clutch release bearing assembly according to Claim 12, characterized in that the said normal (N) likewise extends at a distance from the groove (53) in which the decoupling member (52) is mounted axially movable.

14. A clutch release bearing assembly according to any one of Claims 12 or 13, characterized in that the flank (47) of the retaining groove (43) opposite the drive bearing surface (44) comprises another frustoconical bearing surface (49), of smaller cone angle than the preceding one, adapted to bear the coupling member (42) when the latter is engaged with the said drive bearing surface (44).

15. A clutch release bearing assembly according to any one of Claims 1 to 14, characterized in that the free end of the drive part (25) is bevelled.

16. A clutch release bearing assembly according to any one of Claims 1 to 5, characterized in that the decoupling member is an annular member comprising, regularly distributed along the edges of both its axial ends, notches (73A or B) which alternate circumferentially between these edges and are axially interleaved.

17. A clutch release bearing assembly according to Claims 16, characterized in that the groove (54) of the decoupling member has a four-sided axial profile.

18. A clutch release bearing assembly according to Claims 17, characterized in that the axial profile of the decoupling member is symmetrical relative to a radial median plane with two end edges (71, 72) projecting towards that part (13 or 25) which is adapted to carry the coupling member (42).

EP 0 223 645 B1

FIG.1

FIG.2

FIG.3

FIG.4

FIG.5A

FIG.5B

FIG.5C

FIG.5D

FIG.5E

FIG.6A

FIG.6B

FIG.6C

FIG.6D

FIG.6E

FIG.7

FIG.8

FIG.9

FIG.10

FIG.11